(19) **Europäisches Patentamt European Patent Office Office européen des brevets**

(11) **EP 1 669 471 B1**

(12) **EUROPEAN PATENT SPECIFICATION**

(45) Date of publication and mention
of the grant of the patent:
**21.11.2007 Bulletin 2007/47**

(51) Int Cl.:
*C22C 38/02* (2006.01)  *C22C 38/04* (2006.01)
*C22C 38/06* (2006.01)  *C21C 7/064* (2006.01)
*C21C 7/076* (2006.01)

(21) Application number: **05026392.0**

(22) Date of filing: **02.12.2005**

(54) **Highly ductile steel sheet and method of manufacturing the same**

Hochduktiles Stahlblech und Verfahren zu dessen Herstellung

Tôle d'acier à haute ductilité et procédé de fabrication correspondant

(84) Designated Contracting States:
**DE FR GB**

(30) Priority: **09.12.2004 JP 2004357161**

(43) Date of publication of application:
**14.06.2006 Bulletin 2006/24**

(73) Proprietor: **KABUSHIKI KAISHA KOBE SEIKO SHO**
**Kobe-shi,**
**Hyogo 651-8585 (JP)**

(72) Inventors:
• **Kimura, Sei,**
**Kagogawa Works in Kobe Steel, Ltd**
**Kakogawa-shi**
**Hyogo 675-0137 (JP)**
• **Nakasuga, Takamitsu,**
**Kagogawa Works**
**Kakogawa-shi**
**Hyogo 675-0137 (JP)**

(74) Representative: **Müller-Boré & Partner**
**Patentanwälte**
**Grafinger Strasse 2**
**81671 München (DE)**

(56) References cited:
**EP-A- 1 029 938**

• **PATENT ABSTRACTS OF JAPAN vol. 2003, no. 03, 5 May 2003 (2003-05-05) -& JP 2002 340885 A (KOBE STEEL LTD), 27 November 2002 (2002-11-27)**
• **PATENT ABSTRACTS OF JAPAN vol. 2000, no. 04, 31 August 2000 (2000-08-31) -& JP 2000 008136 A (KAWASAKI STEEL CORP), 11 January 2000 (2000-01-11)**
• **PATENT ABSTRACTS OF JAPAN vol. 2000, no. 05, 14 September 2000 (2000-09-14) -& JP 2000 034542 A (SUMITOMO METAL IND LTD), 2 February 2000 (2000-02-02)**
• **PATENT ABSTRACTS OF JAPAN vol. 2002, no. 02, 2 April 2002 (2002-04-02) -& JP 2001 279373 A (NIPPON STEEL CORP), 10 October 2001 (2001-10-10)**
• **PATENT ABSTRACTS OF JAPAN vol. 2000, no. 07, 29 September 2000 (2000-09-29) -& JP 2000 109950 A (KAWASAKI STEEL CORP), 18 April 2000 (2000-04-18)**

**Description**

The present invention relates to a highly ductile cold-rolled steel sheet having high bore expandability and a method of manufacturing such a highly ductile steel sheet.

Description of the Related Art

Steel sheets for forming body frames of automobiles are required to have high ductility represented by bore expandability. Known inclusions adversely affecting the ductility of steel sheets are oxides, such as $Al_2O_3$, and sulfides, such as MnS. Reduction of the amount of those inclusions contained in steel sheets is important to provide steel sheets with high ductility.

Techniques for improving the ductility of steel sheets disclosed in JP-ANos. 2000-144230 and 2002-327239 are intended to reduce the number of alumina clusters. Atechnique disclosed in JP-ANo. 2000-1736 forms a highly ductile high-tension steel sheet containing oxide inclusions having a predetermined chemical composition and particle sizes in the range of 1 to 50 $\mu$m, and containing at least one of $TiO_2$, CaO and REM oxide.

Basically, those prior art techniques add Ti as an essential component to the steel sheet to improve the ductility of the steel sheet. However, hard TiN inclusions are produced in the steel sheet in some cases and the hard TiN inclusions deteriorate the ductility of the steel sheet.

A cold-rolled steel sheet disclosed in, for example, JP-A No. 2002-212674, in which Ti is not an essential component, contains Mg. Cracks formed in the edge of a punched hole formed in this prior art steel sheet containing Mg are minute and uni form, which proves that the steel sheet has improved bore expandability. Although those prior art techniques are effective in improving the ductility of steel sheets to some extent, the ductility of steel sheets produced by those prior art techniques is not necessarily as high as ductility required in recent years.

JP 2000034542 discloses a high carbon steel strip excellent in cold workability for automobile parts wherein the inclusions consist of 5-30 % CaO, 5-40%, $SiO_2$, 5-60 $M_nO$, 20-60%. $Al_2O_3$ and 0-2% MgO.

Accordingly, it is an object of the present invention to provide a highly ductile steel sheet having high bore expandability and a method of manufacturing a highly ductile steel sheet.

A steel sheet in a first aspect of the present invention has a C content in the range of 0.04 to 0.25% by mass, a Si content in the range of 0.05 to 3% by mass, a Mn content in the range of 0.1 to 3% by mass, an Al content in the range of 0.01 to 2% by mass, a P content of 0.02% by mass or below and higher than 0% by mass, and a S content in the range of 0 to 0.005% by mass; wherein the number of $CaO-Al_2O_3$ inclusions containing CaO, $Al_2O_3$, $SiO_2$ and MgO, having a CaO content of 5% or above, a $SiO_2$ content of 0.1% or above and an $Al_2O_3$ content of 60% or above, respectively having major axes of 30 $\mu$m or above, and contained in 1 kg of the steel sheet is seventy or below.

A steel slab manufacturing method in a second aspect of the present invention includes the steps of: producing CaO slag containing CaO, $Al_2O_3$, $SiO_2$, MgO, MnO and Fe, and having a CaO content of 45% or above, a total Fe content of 5% or below, and a MnO content of 3% or below on a molten steel decarburized in a decarburizing furnace and contained in a ladle; desulfurizing the molten steel to reduce the S content of the molten steel to 0.005% or below by stirring the molten steel and the CaO slag by a gas stirring method; circulating the desulfurized molten steel in a vacuum circulation degassing apparatus for 10 min or longer; and forming a steel slab by casting the molten steel circulated in the vacuum circulation degassing apparatus.

The steel sheet of the present invention can be produced from the thus produced steel slab.

The present invention reduces the S content of the molten steel effectively to suppress the production of sulfide inclusions by effectively desulfurizing the decarburized molten steel decarburized by the decarburizing furnace by the CaO inclusions of a properly adjusted composition, and reduces oxide inclusions originating from the CaO slag and adversely affecting the ductility of the steel to the least possible extent. A highly ductile steel sheet can be produced by processing the steel slab produced by casting the thus produced molten steel.

Various inclusions contained in a steel are principal factors that deteriorate the ductility of steel sheets produced by processing the steel and cause cracks when the steel sheet is processed. The reduction of such inclusions will improve the ductility of the steel sheet. When a molten steel having a high S content is cast to produce a steel slab, MnS inclusions precipitate at a stage of the cast molten steel and the MnS precipitated in the steel affects adversely to the ductility of the steel. Thus it is important to suppress the precipitation of MnS so that the ductility of the steel may not be reduced.

The inventors of the present invention found through studies that the precipitation of MnS can be effectively suppressed by reducing the S content of the steel to a value in the range of 0 to 0.005% by mass. Hereinafter, content in "% by mass" will be simply indicated in "%". From the viewpoint of improving ductility, it is preferable that the S content of the steel is 0.004% or below, more preferably, 0.003% or below.

To reduce the S content of the steel to 0.005% or below, the molten steel needs to be desulfurized in a refining process by mixing desulfurizing slag in the molten steel. The desulfurizing slag may be mixed in the molten steel by any suitable conventional mixing method. For example, the desulfurizing slag may be mixed in the molten steel by a stirring method that blows a gas through a refractory lance into the molten steel to stir the slag and the molten steel or by a stirring method that blows a gas through a plug on the bottom of a ladle into the molten steel to stir the molten steel and the slag.

Desulfurizing slag containing CaO is used generally in the industry. Suitable desulfurizing slag is, for example, CaO, $CaO \cdot CaF_2$ slag, $CaO \cdot Al_2O_3$ slag, $CaO \cdot Al_2O_3 \cdot CaF_2$ slag, $CaO \cdot Al_2O_3 \cdot MgO$ slag and $CaO \cdot Al_2O_3 \cdot SiO_2$ slag. These substances will be inclusively referred to as CaO slag. To form the desulfurizing slag, namely, the CaO slag, on the surface of the molten steel, a CaO flux containing slags above is added to the molten steel. The respective amounts of CaO, total Fe and MnO contained in the slag need to be controlled properly. Suppose that the sum of the respective amounts of CaO, $Al_2O_3$, $SiO_2$, MgO, MnO and total Fe (in some cases, referred to as "T Fe") is 100% (CaO + $Al_2O_3$ + $SiO_2$ + MgO + MnO + total Fe=100%). Then, the slag needs to have a CaO content of 45% or above. Effective desulfurization of the molten steel cannot be expected if the CaO content of the slag is less than 45%. Preferably, the CaO content of the slag is 48% or above, more preferably, 50% or above. The CaO content of the slag can be adjusted to 45% or above by using a CaO flux having a CaO content of 50% or above.

The slag formedon the surface of the molten steel contained in the ladle contains FeO and MnO produced in the molten steel during refining in an oxidation refining furnace, such as a converter or an electric furnace. The desulfurizing effect of the slag decreases if the slag contains an excessive amount of T·Fe content and an excessive amount of MnO. Therefore the respective amounts of T·Fe content and MnO contained in the slag must be properly adjusted. The respective amounts of T·Fe and MnO must be 5.0% or below and 3% or below, respectively, when containing CaO + $Al_2O_3$ + $SiO_2$ + MgO + MnO + total Fe =100%. Preferably, the amount of T·Fe contained in the slag is 4% or below and the amount of MnO contained in the slag is 2% or below. A recommended T·Fe content and a recommended MnO content of the slag are 3% or below and 1% or below, respectively. In order to reduce the slag to adjust the T·Fe content and the MnO content of the slag to values in the foregoing ranges, slag produced during refining in the oxidation refining furnace is removed before the desulfurizing flux is added to the molten steel or Al, Si and C are added to the molten steel or the slag or to either of the molten steel and the slag.

The foregoing desulfurizing process eliminates MnS inclusions that reduce the ductility of the steel sheet. However, inclusions originating in the desulfurizing slag (hereinafter, referred to as "slag inclusions") and produced in the molten steel when the molten steel and the slag are stirred for ladle refining remain in the molten steel when the molten steel is cast to produce a steel slab. The slag inclusions contained in the steel slab reduce the ductility of steel sheets formed by rolling the steel slab.

The slag inclusions are identified by the following condition. The ladle slag has a CaO content of 45% or above and a $SiO_2$ content of below 10%. When the ladle slag and the molten steel are mixed by stirring, the ladle slag reacts with Al contained in the molten steel and changes into a slag containing CaO, $Al_2O_3$, $SiO_2$ and MgO, and having a CaO content of 5% or above and a $SiO_2$ content of 0.1% or above (when containing CaO + $Al_2O_3$ + $SiO_2$ + MgO = 100%). Such a slag is regarded as slag inclusions. The present invention deals with $CaO-Al_2O_3$ inclusions. The $CaO-Al_2O_3$ inclusions contain CaO, $Al_2O_3$, $SiO_2$ and MgO and have a CaO content of 5% or above and an $Al_2O_3$ content of 60% or above. Thus the following description will be made on an assumption that the $CaO \cdot Al_2O_3$ inclusions contain CaO, $Al_2O_3$, $SiO_2$ and MgO, and has a CaO content of 5% or above, a $SiO_2$ content of 0.1% or above and an $Al_2O_3$ content of 60% or above.

The inventors of the present invention made studies of the effect of the $CaO \cdot Al_2O_3$ inclusions contained in steel sheets on the ductility of the steel sheets and found that the $CaO \cdot Al_2O_3$ inclusions having a major axis of 30 $\mu$m or above affect the ductility of the steel sheets and the reduction of the number of the $CaO \cdot Al_2O_3$ inclusions contained in 1 kg of the steel sheet to 70 or below, preferably, 60 or below, more preferably 50 or below improves the ductility of the steel sheets remarkably.

A vacuum circulation degassing process (hereinafter, referred to as "RH process") needs to be executed after the desulfurization process to reduce the amount of the slag inclusions produced by the desulfurization process and contained in the steel by flotative separation. A vacuum circulation degassing apparatus needs to continue the RH process at 10 min or longer to remove the slag inclusions by flotative separation. Preferably, the duration of the RH process is 15 min or longer, more preferably, 20 min or longer.

The present invention provides a highly ductile steel sheet of, for example, a thickness in the range of about 1 to about 3 mm by hot-rolling or cold-rolling a steel slab produced by casting the molten steel processed by the desulfurization process and the RH process. The highly ductile steel sheet can be produced from the foregoing steel slab regardless of the method and conditions of rolling. The chemical composition of the steel needs to be properly adjusted. The ranges of chemical component contents of the steel of the present invention other than S content are determined for the following reasons.

C Content: 0.04 to 0.25%

Although the smaller C content is desirable to improve the ductility, particularly, bore expandability of the steel sheet, the strength of the steel sheet decreases significantly when the carbon content is less than 0.04%. When the C content is higher than 0.25% and the Mn content is in the range specified below, pearlite grains occur excessively, the lamellar intervals of the pearlite grains widens and the balance between strength and local ductility is deteriorated. Therefore, the C content of the steel sheet of the present invention must be in the range of 0.04 to 0.25%. A preferable lower limit C content is on the order of 0.05% and a preferable upper limit C content is on the order of 0.22%.

Si Content: 0.05 to 3%

Si is a useful effective solid solution strengthening element. The Si content of the steel sheet needs to be 0.05% or above to make Si exercise the solid solution strengthening effect. The solid solution strengthening effect of Si saturates at a certain Si content and hence an excessively high Si content is economically disadvantageous. An excessively high Si content will enhance the hot brittleness of the steel sheet. Thus the Si content must be 3% or below. A preferable lower limit of the Si content is 0.1%, more preferably, 0.2% or above. A preferable upper limit of the Si content is 2.5%, more preferably, 2% or below.

Mn Content: 0.1 to 3%

Manganese contained in the steel sheet stabilizes the austenitic phase, facilitates formation of a hard phase during cooling and strengthens the steel sheet. The hard phase necessary for strengthening the steel sheet cannot be formed if the Mn content is excessively low. Therefore, the Mn content must be 0.1% or above. Banded structures develop and the ductility decreases if the Mn content is excessively high. Therefore, an upper limit Mn content must be 3%. Preferably, a lower limit Mn content is 0.2%, more preferably, 0.3% or above. Preferably, an upper limit Mn content is 2.8%, more preferably, 2.5% or below.

Al Content: 0.01 to 2%

Aluminum is necessary for the deoxidation of the molten steel and is effective in promoting desulfurization during ladle refining by lowering the potential of oxygen in the molten steel. The Al content must be 0.01% or above to make such an effect of Al effective. Preferably, the Al content is 0.015%, more preferably, 0.02% or above. The effect of the A1 content saturates at a certain Al content and hence an excessively high A1 content is economically disadvantageous. Therefore, the Al content must be 2% or below, preferably, 1.5% or below.

P Content: 0.02% or below and higher than 0%

Phosphorus strengthens the steel and, at the same time, embrittles the steel and deteriorates the ductility of the steel. An upper limit P content must be 0.02%, preferably, 0.015%. The effect of P increases with the increase of the P content. Preferably, the P content is 0.003% or above, more preferably, 0.005% or above to make the effect of P effective.

The molten steel contains, in addition to the foregoing basic component elements, Fe and unavoidable impurities, such as Cr, Cu and Sn. When necessary, the steel sheet may contain additional trace elements, such as Mo, V and Nb, in contents in the range of about 0.01 to about 0.05%.

Examples of the steel sheet of the present invention will be described. However, the examples are intended to illustrate the invention and are not to be construed to limit the scope of the invention. Naturally, various changes and variations may be made in the examples specifically described herein without departing from the scope and spirit of the invention.

Examples

Two hundred and fifty tons of a molten steel decarburized in a converter was tapped from the converter into a ladle. Various alloy steels were added to the molten steel by a ladle refining apparatus to adjust the chemical composition of the molten steel to a predetermined chemical composition and the molten steel was desulfurized. Table 1 shows the respective compositions of desulfurizing slag. Argon gas (Ar gas) was blown through the lance into the molten steel to stir the molten steel. The ladle was carried to a vacuum circulation degassing apparatus after the completion of the composition adjustment and desulfurization. The molten steel was circulated for the RH process by the vacuum circulation degassing apparatus. RH process times, namely, times of duration of the RH process, are shown in Table 1. Molten steels in Examples 3 and 4 were not processed by ladle refining and molten steels in Examples 5 and 6 were not processed by the RH process.

Table 1

| Sample No. | Molten steel processing process | | RH processing time (min) | Composition of desulfurizing slag for ladle refining (% by mass) | | | | | | |
|---|---|---|---|---|---|---|---|---|---|---|
| | Ladle refining | RH process | | CaO | $Al_2O_3$ | $SiO_2$ | MgO | T.Fe | MnO | Total |
| 1 | ○ | ○ | 13 | 51.8 | 26.2 | 8.5 | 7.1 | 5.2 | 1.2 | 100 |
| 2 | ○ | ○ | 25 | 46.1 | 29.5 | 8.2 | 8.1 | 2.5 | 5.6 | 100 |
| 3 | ○ | ○ | 17 | 39.5 | 36.8 | 8.1 | 9.0 | 2.5 | 4.1 | 100 |
| 4 | × | ○ | 15 | - | - | - | - | - | - | 100 |
| 5 | × | ○ | 19 | - | - | - | - | - | - | 100 |
| 6 | ○ | × | - | 53.1 | 31.3 | 6.2 | 7.1 | 1.1 | 1.2 | 100 |
| 7 | ○ | × | - | 53.7 | 31.8 | 5.8 | 6.5 | 0.8 | 1.4 | 100 |
| 8 | ○ | ○ | 7 | 49.9 | 34.4 | 4.8 | 7.5 | 1.5 | 1.9 | 100 |
| 9 | ○ | ○ | 11 | 46.7 | 33.7 | 6.2 | 9.7 | 2.1 | 1.6 | 100 |
| 10 | ○ | ○ | 15 | 48.2 | 36.1 | 5.1 | 8.2 | 1.1 | 1.3 | 100 |
| 11 | ○ | ○ | 18 | 53.2 | 37.1 | 4.2 | 3.6 | 0.9 | 1.0 | 100 |
| 12 | ○ | ○ | 23 | 57.5 | 31.0 | 3.4 | 5.5 | 1.2 | 1.4 | 100 |

Steel slabs were produced by casting the molten steels processed by the RH process by a continuous casting process. The steel slabs were subjected to a hot rolling process to produce hot-rolled steel sheets of a thickness in the range of 3 to 4 mm. The hot-rolled steel sheets were subjected to a cold rolling process to produce cold-rolled steel sheets of a thickness in the range of 2 to 3 mm.

Sample pieces for a bore expand test were sampled form the cold-rolled steel sheets. The sample pieces were tested by the flowing test method to evaluate their bore expandability. The number of $CaO.Al_2O_3$ inclusions contained in the steel sheets was determined by the following counting method.

Bore-expandability

The sample pieces were punched to form bores of 10 mm in diameter therein and the punched sample pieces were subjected to a bore expand test. In the bore expand test, the bore of the sample piece was expanded by pressing a conical punch having a point angle of 60˚ into the bore, and the diameter of the thus expanded bore was measured when cracks extending through the thickness of the sample piece were formed in the edge of the bore. A limit bore expandability $\lambda$ was calculated by using an expression:

$$\lambda \ (\%) \ = \ \{(D_1/D_0)/D_0\} \ \times \ 100$$

where $D_0$ is the initial diameter of the bore and $D_1$ is the diameter of the expanded bore. Steel sheets having higher ductility have higher limit bore expandability.

Number of $CaO \cdot Al_2O_3$ inclusions

Inclusions contained in the cold-rolled steel sheet were extracted by a method disclosed in JP-A No. 2002-340885. The cold-rolled steel sheet was heated and held at 1000˚C for 30 min and then the steel sheet was cooled rapidly for a solution heat treatment to eliminate carbides from the steel sheet. Eight sample pieces of 3.2 mm × 100 mm × 50 mm each having a weight of 1 kg were cut out from the cold-rolled steel sheet. Each sample piece was immersed in a ferrous chloride solution of pH 6.0 to dissolve 1 kg of iron matrix by a constant-current electrolysis method.

Then, the solution was filtered by a filter having pores of 27 $\mu$m in diameter to obtain a residue containing CaO inclusions. The number of $CaO-Al_2O_3$ inclusions containing CaO, $Al_2O_3$, $SiO_2$ and MgO, having a CaO content of 5% or above, a $SiO_2$ content of 0.1% or above and an $Al_2O_3$ content of 60% or above, respectively having major axes of 30 $\mu$m or above and contained in the residue was counted by using a scanning electron microscope combined with a wavelength dispersive x-ray spectrometer (SEM·WDS).

Table 2 shows the counted numbers of $CaO-Al_2O_3$ inclusions and the chemical composition of the steel sheets.

Table 2

| Sample No. | Chemical composition of steel sheet (% by mass) | | | | | | Number of CaO·$Al_2O_3$ inclusions per 1 kg of steel sheet | Bore expandability (%) |
|---|---|---|---|---|---|---|---|---|
| | C | Si | Mn | P | S | Al | | |
| 1 | 0.04 | 1.05 | 2.71 | 0.006 | 0.006 | 0.025 | 37 | 71 |
| 2 | 0.14 | 0.98 | 2.10 | 0.011 | 0.008 | 0.014 | 22 | 77 |
| 3 | 0.11 | 1.22 | 2.46 | 0.009 | 0.007 | 0.038 | 32 | 81 |
| 4 | 0.08 | 1.45 | 2.25 | 0.010 | 0.009 | 0.027 | 40 | 58 |
| 5 | 0.08 | 1.31 | 2.41 | 0.010 | 0.007 | 0.031 | 35 | 83 |
| 6 | 0.07 | 1.65 | 1.51 | 0.010 | 0.001 | 0.034 | 96 | 68 |
| 7 | 0.16 | 1.52 | 2.23 | 0.013 | 0.002 | 0.027 | 89 | 49 |
| 8 | 0.09 | 0.07 | 0.82 | 0.005 | 0.001 | 0.029 | 81 | 90 |
| 9 | 0.15 | 0.52 | 1.28 | 0.009 | 0.004 | 0.028 | 63 | 113 |
| 10 | 0.06 | 0.73 | 1.57 | 0.012 | 0.003 | 0.047 | 46 | 126 |
| 11 | 0.17 | 1.35 | 2.16 | 0.010 | 0.002 | 0.036 | 19 | 131 |
| 12 | 0.13 | 0.59 | 2.00 | 0.006 | 0.004 | 0.044 | 34 | 120 |

It is known from the measured data shown in Table 2 that Samples 9 to 12 meet all the requirements of the present invention. The numbers of the CaO·$Al_2O_3$ inclusions contained in Samples 9 to 12 are small and the Samples 9 to 12 have high bore expandability.

Each of Samples 1 to 8 does not meet some of the requirements of the present invention and has low bore expandability. As regards Samples 1 to 5, although processing time for processing the steel sheet by the RH process is within a range specified by the present invention and the numbers of CaO·$Al_2O_3$ inclusions are within a range required by the present invention, the composition of the desulfurizing slag used by ladle refining does not meet conditions specified by the present invention (Samples 1 to 3) or the molten steel was not processed by ladle refining (Samples 4 and 5). Consequently, the steel sheets in Samples 1 to 8 have a large S content and a low ductility.

The composition of the desulfurizing slag for the ladle refining of the molten steels for forming the steel sheets in Samples 6 to 8 meet requirements of the present invention and have S contents of 0.0055 or below, respectively. However, the molten steels for forming the steel sheets in Samples 6 and 7 are not processed by the RH process after ladle refining and the molten steels for forming the steel sheet in Sample 8 were processed by the RH process for a time shorter than 10 min. Therefore, the numbers of CaO·$Al_2O_3$ inclusions contained in 1 kg of the steel sheets in Samples 6 to 8 are greater than seventy and deteriorates bore expandability.

Although the invention has been described in its preferred embodiments with a certain degree of particularity, obviously many changes and variations are possible therein. It is to be understood that the present invention may be practiced otherwise than as specifically described herein without departing from the scope thereof.

**Claims**

**1.** A steel sheet having a C content in the range of 0.04 to 0.25% by mass, a Si content in the range of 0.05 to 3% by mass, a Mn content in the range of 0.1 to 3% by mass, an Al content in the range of 0.01 to 2% by mass, a P content of 0.02% by mass or below and higher than 0% by mass, a S content in the range of 0 to 0.005% by mass, optionally a Mo content in the range of 0.01 to 0.05% by mass, optionally a V content in the range of 0.01 to 0.05% by mass, optionally a Nb content in the range of 0.01 to 0.05% by mass, and the balance being Fe and inevitable impurities;

wherein the number of CaO · Al$_2$O$_3$ inclusions containing CaO, Al$_2$O$_3$, SiO$_2$ and MgO, which contain 5% or above of CaO, 0.1% or above of SiO$_2$ and 60% or above of Al$_2$O$_3$ in 100% of oxides including CaO, Al$_2$O$_3$, SiO$_2$ and MgO and having major axes of 30$\mu$m or above, and contained in 1 kg of the steel sheet is seventy or below.

**2.** The steel sheet according to claim 1, wherein the S content is in the range of 0 to 0.003% by mass.

**3.** A method of manufacturing a steel slab for forming the steel sheet according to claim 1, said method comprising the steps of:

producing CaO slag containing CaO, Al$_2$O$_3$, SiO$_2$, MgO, MnO and total Fe, and having a CaO content of 45% or above, a total Fe content of 5% or below, and a MnO content of 3% or below on a molten steel decarburized in a decarburizing furnace and contained in a ladle by adding a CaO flux to the molten steel;
desulfurizing the molten steel to reduce the S content of the molten steel to 0.005% or below by stirring the molten steel and the CaO slag by a gas stirring method in the ladle;
circulating the desulfurized molten steel contained in the ladle in a vacuum circulation degassing apparatus for 10 min or longer; and
forming a steel slabby casting the molten steel circulated in the vacuum circulation degassing apparatus.

**4.** The method according to claim 3, the CaO slag has a CaO content of 50% by mass or above.

**5.** The method according to claim 3 or 4, wherein the CaO slag has a MnO content of 2% by mass or below and a total Fe content of 3% by mass or below.

**Patentansprüche**

**1.** Stahlblech mit einem C-Gehalt in einem Bereich von 0,04 bis 0,25 Masseprozent, einem Si-Gehalt in einem Bereich von 0,05 bis 3 Masseprozent, einem Mn-Gehalt in einem Bereich von 0,1 bis 3 Masseprozent, einem Al-Gehalt in einem Bereich von 0,01 bis 2 Masseprozent, einem P-Gehalt von 0,02 Masseprozent oder weniger und mehr als 0 Masseprozent, einem S-Gehalt in einem Bereich von 0 bis 0,005 Masseprozent, gegebenenfalls einem Mo-Gehalt in einem Bereich von 0,01 bis 0,05 Masseprozent, gegebenenfalls einem V-Gehalt in einem Bereich von 0,01 bis 0,05 Masseprozent, gegebenenfalls einem Nb-Gehalt in einem Bereich von 0,01 bis 0,05 Masseprozent, und wobei der Rest Fe und unvermeidbare Verunreinigungen sind, wobei die Anzahl von CaO·Al$_2$O$_3$-Einschlüssen, enthaltend CaO, Al$_2$O$_3$, SiO$_2$ und MgO, die 5% oder mehr CaO, 0,1% oder mehr SiO$_2$ und 60% oder mehr Al$_2$O$_3$ in 100% von Oxiden, einschließlich CaO, Al$_2$O$_3$, SiO$_2$ und MgO, enthalten, und Hauptachsen von 30$\mu$m oder darüber aufweisen und in 1 kg Stahlblech enthalten sind, 70 oder weniger beträgt.

**2.** Stahlblech nach Anspruch 1, wobei der S-Gehalt in einem Bereich von 0 bis 0,003 Masseprozent liegt.

**3.** Verfahren zur Herstellung einer Stahlplatte zum Bilden eines Stahlblechs nach Anspruch 1, wobei das Verfahren die Schritte umfaßt:

Herstellen einer CaO-Schlacke, enthaltend CaO, Al$_2$O$_3$, SiO$_2$, MgO, MnO und Gesamteisen, und mit einem CaO-Gehalt von 45% oder mehr, einem Gesamteisengehalt von 5% oder weniger und einem MnO-Gehalt von 3% oder weniger, auf einem geschmolzenen Stahl, der in einem Decarbonisierungsofen decarbonisiert ist und in einer Pfanne enthalten ist, durch Zugeben eines CaO-Flußmittels zu dem geschmolzenen Stahl,
Entschwefeln des geschmolzenen Stahls, um den S-Gehalt des geschmolzenen Stahls auf 0,005% oder weniger durch Rühren des geschmolzenen Stahls und der CaO-Schlacke durch ein Gasrührverfahren in der Pfanne zu reduzieren,
Zirkulieren des entschwefelten geschmolzenen Stahls, der in der Pfanne enthalten ist, in einer Vakuumzirkulationsentgasungsvorrichtung für 10 Minuten oder länger und
Bilden einer Stahlplatte durch Gießen des geschmolzenen Stahls, der in der Vakuumzirkulationsentgasungsvorrichtung zirkuliert wurde.

**4.** Verfahren nach Anspruch 3, wobei die CaO-Schlacke einen CaO-Gehalt von 50 Masseprozent oder mehr aufweist.

**5.** Verfahren nach Anspruch 3 oder 4, wobei die CaO-Schlacke einen MnO-Gehalt von 2 Masseprozent oder weniger und einen Gesamteisengehalt von 3 Masseprozent oder weniger aufweist.

EP 1 669 471 B1

**Revendications**

1. Feuille d'acier ayant une teneur en C allant de 0,04 à 0,25 % en masse, une teneur en Si allant de 0,05 à 3 % en masse, une teneur en Mn allant de 0,1 à 3 % en masse, une teneur en Al allant de 0,01 à 2 % en masse, une teneur en P de 0,02 % en masse ou moins et supérieure à 0 % en masse, une teneur en S allant de 0 à 0,005 % en masse, facultativement une teneur en Mo allant de 0,01 à 0,05 % en masse, facultativement une teneur en V allant de 0,01 à 0,05 % en masse, facultativement une teneur en Nb allant de 0,01 à 0,05 % en masse, le reste étant constitué de Fe et d'impuretés inévitables ; dans laquelle le nombre d'inclusions de $CaO.Al_2O_3$ contenant $CaO$, $Al_2O_3$, $SiO_2$ et $MgO$, qui contiennent 5 % ou plus de $CaO$, 0,1 % ou plus de $SiO_2$ et 60 % ou plus de $Al_2O_3$ dans 100 % d'oxydes comprenant $CaO$, $Al_2O_3$, $SiO_2$ et $MgO$ et présentant des axes majeurs de 30 $\mu$m ou plus, et contenues dans 1 kg de la feuille d'acier est de soixante-dix ou moins.

2. Feuille d'acier selon la revendication 1, dans laquelle la teneur en S va de 0 à 0,003 % en masse.

3. Procédé de fabrication d'une brame d'acier pour la formation de la feuille d'acier selon la revendication 1, ledit procédé comprenant les étapes consistant à :

   produire une scorie de $CaO$ contenant $CaO$, $Al_2O_3$, $SiO_2$ $MgO$, $MnO$ et du Fe total et présentant une teneur en $CaO$ de 45 % ou plus, une teneur en Fe total de 5 % ou moins et une teneur en $MnO$ de 3 % ou moins sur un acier fondu décarburé dans un four de décarburation et contenue dans une poche par l'ajout d'un flux de $CaO$ à l'acier fondu ;
   désulfurer l'acier fondu pour réduire la teneur en S de l'acier fondu à 0,005 % ou moins en agitant l'acier fondu et la scorie de $CaO$ à l'aide d'un procédé d'agitation gazeuse dans la poche ;
   faire circuler l'acier fondu désulfuré contenu dans la poche dans un appareil de dégazage par circulation sous vide pendant 10 min ou plus ; et
   former une brame d'acier en coulant l'acier fondu mis en circulation dans l'appareil de dégazage par circulation sous vide.

4. Procédé selon la revendication 3, dans lequel la scorie de $CaO$ a une teneur en $CaO$ de 50 % en masse ou plus.

5. Procédé selon la revendication 3 ou 4, dans lequel la scorie de $CaO$ a une teneur en $MnO$ de 2 % en masse ou moins et une teneur en Fe total de 3 % en masse ou moins.

8

**REFERENCES CITED IN THE DESCRIPTION**

**Patent documents cited in the description**

- JP 2000144230 A
- JP 2002327239 A
- JP 2000001736 A
- JP 2002212674 A
- JP 2000034542 B
- JP 2002340885 A